# EUROPEAN PATENT APPLICATION

(11) **EP 1 767 800 A1**
(43) Date of publication of application: **28.03.2007**
(21) Application number: 05743626.3
(22) Date of filing: 24.05.2005
(51) Int. Cl.: F16C 33/66, F16C 19/16, F16C 19/26, F16C 33/58

(54) **LUBRICATING STRUCTURE OF ROLLING BEARING**

(30) Priority: 11.06.2004 JP 2004173932
(71) Applicant: NTN CORPORATION, Osaka-shi, Osaka 550-0003 (JP)
(72) Inventor: MORI, Masatsugu c/o NTN CORPORATION, Kuwana-shi Mie 5110811 (JP); KOYAMA, Mineo c/o NTN CORPORATION, Kuwana-shi Mie 5110811 (JP)
(74) Representative: Hirsch & Associés
(86) International application number: PCT/JP2005/009413
(87) International publication number: WO 2005/121579

(57) **Abstract**

A lubricating structure of a rolling bearing capable of achieving an increase in speed and service life and a maintenance-free by using only a grease sealed in the bearing and efficiently using a grease base oil. The lubricating structure comprises a mist recovery mechanism (6) recovering mist produced during the operation near a rolling-element rolling space (5) into a recovery space (11) and a re-inflow mechanism (7) in the inner ring rotating rolling bearing lubricated with the grease sealed in the bearing. The re-inflow mechanism (7) re-flows, by the rotation of an inner race (1), the mist recovered into the recovery space (11) into bearing spaces from the inner diameter side of a retainer (4) by utilizing the outside diameter inclined surface (1b) of the inner ring.

## Description

### FIELD OF THE INVENTION

The present invention relates to a lubricating structure in a rolling bearing such as, for example, a single row cylindrical roller bearing or an angular contact ball bearing, which can be used in supporting a machine tool spindle or the like and is designed to increase the utilization of a sealed grease.

### BACKGROUND OF THE INVENTION

Methods of lubricating a single row cylindrical roller bearing or an angular contact ball bearing that is used to support a machine tool spindle includes an air-oil lubrication, in which a lubricant oil is mixed with a delivery air and is then jetted into the bearing through a nozzle, and a grease lubrication that can be maintenance-free. Particularly in a high speed region, the air-oil lubrication has been a mainstream method. In today's machine tools, speed-up of a spindle is desired for in order to increase the processing efficiency. As a technique meeting this desire, the air-oil lubrication can be said to be a lubricating method excellent in high speed characteristic and increase of the service life since a small quantity of oil can be supplied stably for a substantial period of time.

As a bearing relying on the air-oil lubrication, the structure is known, in which a nozzle tip is set inside an air curtain generated in a retainer end face corresponding portion and thus a supply of the air-oil takes place inside the air curtain at all times (See, for example, the Japanese Laid-open Patent Publication No. 2004-190777, published July 8, 2004). However, this air-oil lubrication method requires, as incidental equipments, an air-oil supply device and an air-oil supply structure towards a bearing and also requires a substantial amount of air and, therefore, there are problems associated with cost, noise, energy saving and resource saving. Also, there is an additional problem that the environment may be contaminated as a result of scattering of oil. In order to alleviate those problems, the speed-up relying on a grease lubrication has recently come to be highlighted and the desire therefor is also increasing.

In the machine tool spindle bearing employing the grease lubrication, because of the necessity to suppress a temperature increase of the bearing, in order to suppress the stirring resistance during a high speed rotation, the initially sealed grease is reduced to a value corresponding to 10 to 20% of the space capacity.

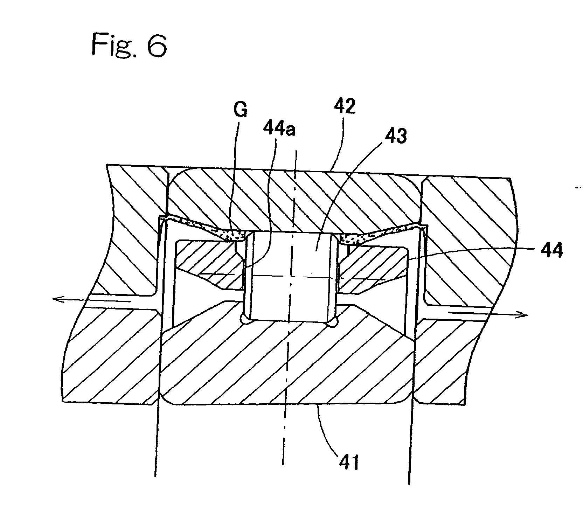

Also, in the grease lubrication, during assemblage of the bearing, a grease is applied to an inner race, a retainer, rolling elements and an outer race. However, in the case of, for example, the single row cylindrical roller bearing of a type shown in Fig. 6, when the DN value attains a high speed rotation range of 800,000, a grease G deposited on a inner race 41, a retainer 4 and a rolling elements 43 is expelled by the effect of a centrifugal force towards portions of an inner diametric surface of the outer race on respective sides of the rolling elements, with an extremely small amount of the grease G remaining consequently on the inner race 41, the retainer 44 and the rolling elements 43. In view of this, an amount of lubrication contributing to contact portions becomes extremely small. The contact portions referred to above include, in the case of a rolling element guide type, those between the inner race 41 and the rolling elements 43, between the outer race 42 and the rolling elements 43, and between the rolling elements 43 and retainer pockets 44a. In the case of an outer race guide retainer, the retainer 44 and an outer race inner diameter guide surface will form a contact portion.

As discussed above, in the case of the grease lubrication, under the lubricating environment at a high speed range, an insufficient lubrication is apt to occur and it may be expected that it quickly reachs the lubrication life.

### SUMMARY OF THE INVENTION

The present invention has for its object to eliminate those problems discussed above and is intended to provide a lubricating structure of a rolling bearing, in which the grease filled in the bearing can be efficiently utilized to achieve an increase in speed, a long service life and a maintenance-free.

The lubricating structure of the rolling bearing of the present invention is such that in an inner-race-rotating rolling bearing that is lubricated with a grease sealed within the bearing, there is provided a mist recovery mechanism for recovering into a recovery space, a mist generated during an operation in the vicinity of a rolling-element rolling space, and a re-inflow mechanism for re-inflowing the mist, which has been recovered into the recovery space, into a bearing space from an inner-diameter side of a retainer along an inclined surface of an outer-diameter side of an inner race by utilization of rotation of the inner race.

Generally, while during the rotation the bearing imports a base oil from the grease and then consumes it, an oil component that is misted simultaneously is generated. The oil component misted during this operation is conventionally expelled to the outside of the bearing and is hardly re-inflowed into the inside of the bearing. One factor thereof includes generation of an air curtain as a result of rotation of the retainer, which makes it difficult for the misted oil component to be re-inflowed. However, with the lubricating structure according to the construction described above, since the re-inflow mechanism is provided, which utilizes the inclined surface of the inner race outer diameter to allow the misted oil component to re-inflow into the bearing space from an inner-diameter side of the retainer by the effect of rotation of the inner race, even though the air curtain is formed as a result of rotation of the retainer, the misted oil component can smoothly flow into the bearing. Because of this, the misted oil component generated during the operation can be recovered by the mist recovery mechanism and is returned to the bearing by the re-inflow mechanism for reuse in lubrication.

Since as described above, the misted oil component of the grease is re-inflowed inwardly of the air curtain in the form as it stands and is then used for lubrication, an insufficient lubrication at a high speed region can be remedied, a loss of an oil film within the bearing can be prevented and the oil component of the grease can be efficiently consumed, thereby contributing to an increase of the service life.

Also, since unlike the conventional case of the inner-race rotating type, in which the supply of the grease is carried out from outside, the filled grease is recirculated and the lubrication is carried out with a slight amount of the lubricant oil, there is no cause of an excessive supply of the grease, which leads to an increase of the temperature resulting from the stirring resistance, and thus increase of the speed of rotation can be achieved.

In the present invention, the mist recovery mechanism referred to above may include a recovery space defining component for defining the recovery space concurrently serving as an outer-race spacer positioned adjacent to an outer race of the bearing. In the case of this construction, since the recovery space defining component for forming the recovery space can be dispensed with as the outer race spacer concurrently serves as the recovery space defining component, the number of component parts can be reduced and assemblage of the rolling bearing into a machine can be facilitated.

In the present invention, the mist recovery mechanism referred to above may include an outer race extension of an outer race, extending axially beyond a plane containing an end face of the inner race, and a ring-shaped recovery space defining component fitted to the outer race extension to define the recovery space inside an inner periphery of the outer race extension.

In the case of this construction, a member forming a part of the recovery space defining component can be dispensed with as it is concurrently served by the outer race extension and, therefore, the number of component parts can be reduced and assemblage of the rolling bearing into a machine can be facilitated.

In the present invention, the re-inflow mechanism may include a gap defining piece for defining an annular gap along the inclined surface on the outer diameter side of the inner race, in which one end of the annular gap is communicated with the mist recovery space. Formation of the gap defining piece is effective to allow the recovered misted oil component to be guided inwardly of the air curtain, formed as a result of rotation of the retainer, and also to re-inflow efficiently into the bearing.

In the present invention, the re-inflow mechanism may include a gap defining piece for forming an annular gap along the inclined surface on the outer diameter side of the inner race, in which the gap defining piece is provided in the recovery space defining component and the annular gap is communicated with the recovery space through an opening which is provided in an inner peripheral wall of the recovery space defining component. In the case of this construction, since the recovery space and the annular gap are communicated with each other through the opening provided in the inner peripheral wall of the recovery space defining component, the mist within the recovery space can be efficiently introduced into the annular gap by the effect of a difference in pressure between the recovery space and the annular gap.

In the present invention, the bearing may be either a cylindrical roller bearing or an angular contact ball bearing. In the case of the cylindrical roller bearing, the inclined surface can be formed in an outer diametric surface of a collar provided in, for example, the inner race. In the case of the angular contact ball bearing, since a counterbore is present on a front side of the inner race for formation of the contact angle, a position where the counterbore exist can be used for formation of the inclined surface of the inner race.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a sectional view of a lubricating structure in a rolling bearing according to a first preferred embodiment of the present invention;
Fig. 2 is a sectional view of the lubricating structure in the rolling bearing according to a second preferred embodiment of the present invention;
Fig. 3 is a sectional view of the lubricating structure in the rolling bearing according to a third preferred embodiment of the present invention;
Fig. 4 is a sectional view of the lubricating structure in the rolling bearing according to a fourth preferred embodiment of the present invention;
Fig. 5 is a sectional view of a machine tool spindle device utilizing the lubricating structure of the rolling bearing according to any one of the embodiments shown respectively in Figs. 1 and 2; and
Fig. 6 is a sectional view of a lubricating structure in a rolling bearing of a conventional type.

### DESCRIPTION OF THE PREFERRED EMBODIMENTS

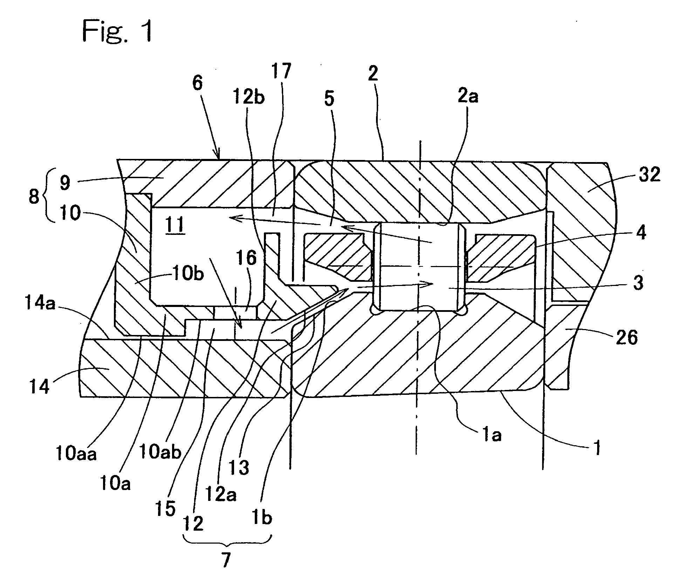

A first preferred embodiment of the present invention will be described with reference to Fig. 1. A rolling bearing shown in Fig. 1 is in the form of a grease filled cylindrical roller bearing including an inner race 1, an outer race 2 and a plurality of rolling elements 3 interposed between raceway surfaces 1a and 2a of the inner and outer races 1 and 2. The rolling elements 3 are in the form of a cylindrical roller and are retained by a retainer 4. A bearing lubricating structure in the rolling bearing described above includes a mist recovery mechanism 6 for recovering a mist of a grease generated during the operation in the vicinity of a rolling-element rolling space 5, and a re-inflow mechanism 7 for re-inflowing the mist, which has been recovered by the mist recovery mechanism 6, into a bearing space from an inner-diameter side of the retainer 4 along an inclined surface 1b of an outer-diameter side of the inner race 1, by utilizing rotation of the inner race 1. One side of the bearing space between the inner and outer races 1 and 2 is sealed by an outer race retaining lid 32 and an inner race positioning spacer 26. The mist recovery mechanism 6 and the re-inflow mechanism 7 are provided on the other side of the bearing. On this side, the mist recovery mechanism 6 and the re-inflow mechanism 7 concurrently serve as a seal to prevent a leakage of the grease from a bearing backside.

The mist recovery mechanism 6 includes a recovery space defining component 8 concurrently serving as an outer race spacer which is positioned adjacent to the outer race 2 to define a mist recovery space 11. The recovery space defining component 8 is made up of an outer peripheral side member 9 concurrently serving as the outer race spacer adjacent to the outer race 2, and an inner peripheral side member 10 of a generally L-sectioned configuration fixed to an inner diametric surface of the outer peripheral side member 9. This inner peripheral side member 10 has an inner peripheral wall 10a coaxial with the inner race 1 and a vertical wall 10b extending from one end of the inner peripheral wall 10a towards an outer diameter side, with the vertical wall 10b fixed to an inner diametric surface of the outer peripheral side member 9 by means of a press-fitting or a bonding agent. Alternatively, fixture of the inner peripheral side member 10 to the outer peripheral side member 9 may be carried out by means of a retaining ring.

The re-inflow mechanism 7 is defined by the inclined surface 1b, formed on the outer diametric surface of the inner race 1, and a gap defining piece 12 formed in one end portion of the inner peripheral wall 10a of the inner peripheral side member 10 adjacent the bearing and arranged in face-to-face relation with the inclined surface 1b of the inner race 1. The gap defining piece 12 is so arranged as to extend into the bearing beyond an end face of the retainer 4. The inclined surface 1b of the inner race 1 is provided on an outer diametric surface on one side displaced from the raceway surface 1a of the inner race 1 so that one side adjacent the raceway surface 1a has a larger diameter. The gap defining piece 12 has an inner diametric surface rendered to be an inclined surface 12a extending along the inclined surface 1b of the inner race 1, with an annular gap 13 defined between this inclined surface 12a and the inclined surface 1b of the inner race 1.

The inner diametric surface of the inner peripheral wall 10a of the inner peripheral side member 10 has a reduced diameter portion 10aa, located in one end thereof away from the bearing, and a large diameter portion 10ab defined in a portion thereof adjacent the bearing and remote from the reduced diameter portion 10aa and forming a step relative to the reduced diameter portion 10aa, with the large diameter portion 10ab continued to the inclined surface 12a of the gap defining piece 12. The inner diametric surface large diameter portion 10ab of the inner peripheral wall 10a, the inclined surface 1b of the inner race 1, and the outer diametric surface 14a of the inner race spacer 14 cooperatively define an annular inner peripheral side space 15, which is communicated with one end of the annular gap 13. The inner peripheral side space 15 is also communicated with the mist recovery space 11 through an opening 16 defined in the inner peripheral side member inner peripheral wall 10a. In summary, the annular gap 13 is communicated with the mist recovery space 11 through the inner peripheral side space 15 and the opening 16.

The gap defining piece 12 has an outer peripheral portion provided with a vertical wall portion 12b extending towards an outer diametric side and partitioning between the rolling-element rolling space 5 and the mist recovery space 11. An outer diametric side end of the vertical wall portion 12b and the outer peripheral side member 9 define therebetween an introducing passage 17 for introducing the mist, generated within the rolling-element rolling space 5, into the mist recovery space 11.

An operation of the above described construction will be described. When the inner race 1 of the bearing filled with the grease rotates, the bearing imports a base oil from the grease, which is subsequently consumed in lubricating the raceway surfaces 1a and 2a of the inner and outer races 1 and 2, while a portion of the base oil in the grease is at the same time misted as a result of contact with the rolling elements 3 then rolling, with the resultant mist becoming afloat within the rolling-element rolling space 5. The mist so generated in the manner described above migrates having been purged in a direction shown by the arrow in Fig. 1 while swirling, by the effect of an airflow brought about by revolution of the rolling element 3, finally flowing from the introducing passage 17 into the mist recovery space 11 of the recovery space defining component 8. Since the mist recovery space 11 and the inner peripheral side space 15 are communicated with each other through the opening 16, the mist within the mist recovery space 11 further flows into the inner peripheral side space 15 by the effect of a pressure difference between those spaces 11 and 15.

The mist within the inner peripheral side space 15 is introduced and, hence, re-inflows into the bearing by a centrifugal force by the effect of a difference in velocity resulting from difference in position within the gap 13 between the inner race inclined surface 1b and the gap defining piece 12 in a radial direction. Since a tip of the gap defining piece 12 is positioned inside the bearing beyond the end face of the retainer 5, it flows smoothly into the bearing without being affected by a resistance brought about by an air curtain occurring at the end face of the retainer 5.

Thus, with the lubricating structure in the rolling bearing, since the base oil mist generated during the operation in the grease lubrication is recovered and reused, it is possible to increase the lubricating lifetime and also to dispense with the necessity of maintenance. Also, since unlike the conventional case of the inner-race rotating type, in which the supply of the grease is carried out from outside, the filled grease is recirculated and the lubrication is carried out with a slight amount of the lubricant oil, there is no cause of an excessive supply of the grease which leads to an increase of the temperature resulting from the stirring resistance. Accordingly, increase of the speed of rotation can be achieved.

Also, since the recovery space defining component 8 forming the mist recovery space 11 concurrently serves as the outer race spacer, the number of component parts used can be reduced and assemblage of the rolling bearing into a machine can be increased.

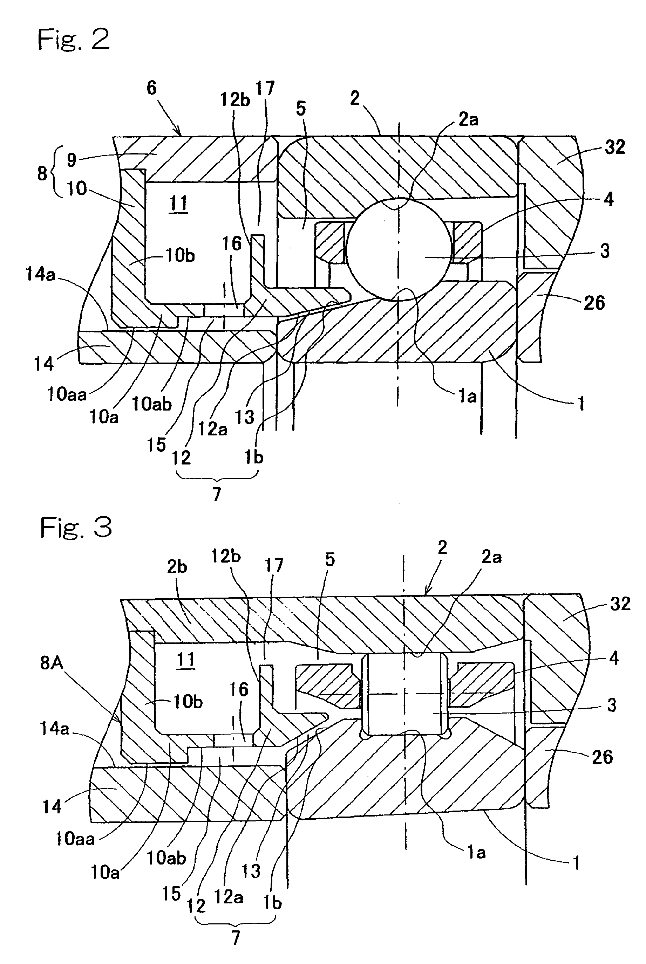

Fig. 2 illustrates a second preferred embodiment of the present invention. This embodiment is such that the lubricating structure according to the embodiment shown in Fig. 1 is applied to an angular contact ball bearing and the rolling elements 3 are therefore employed in the form of a ball. The recovery space defining component 8, the inclined surface 1b of the inner race 1, and the gap defining piece 12 are provided on a backside of the bearing, that is, on a front side of the inner race 1. Other structural features are similar to those in the embodiment shown in Fig. 1.

In the angular contact ball bearing, since the inner race 1 is counterbored on an outer periphery at the front side, the inclined surface 1b is defined in a portion that defines the counterbore, and a space for disposition of the gap defining piece 12 can easily be secured when the gap defining piece 12 is arranged.

Fig. 3 illustrates a third preferred embodiment of the present invention. This embodiment is such that in the lubricating structure according to the embodiment shown in Fig. 1, the outer race 2 is provided with an outer race extension 2b extending axially beyond a plane containing an end face of the inner race 1 on the bearing backside, and the mist recovery mechanism 6 is made up of this outer race extension 2b and a ring-shaped recovery space defining component 8A fitted to the outer race extension 2b so as to define the mist recovery space 11 inside an inner periphery of the outer race extension 2b. The recovery space defining component 8A is a member of the similar shape as the inner peripheral side member 10 in the embodiment shown in Fig. 1 and is formed integrally with the gap defining piece 12 forming a part of the re-inflow mechanism 7 in one end thereof adjacent the bearing. In other words, in this embodiment, the outer peripheral side member 9 in the embodiment shown in Fig. 1 is dispensed with as a result that the outer peripheral side member 9 of the recovery space defining component 8 in the embodiment shown in Fig. 1 is replaced with the outer race extension 2b.

In this embodiment, since the outer peripheral side member 9 of the recovery space defining component 9 in the embodiment shown in Fig. 1 is dispensed with, the number of component parts can be reduced and assemblage of the rolling bearing into a machine can be facilitated.

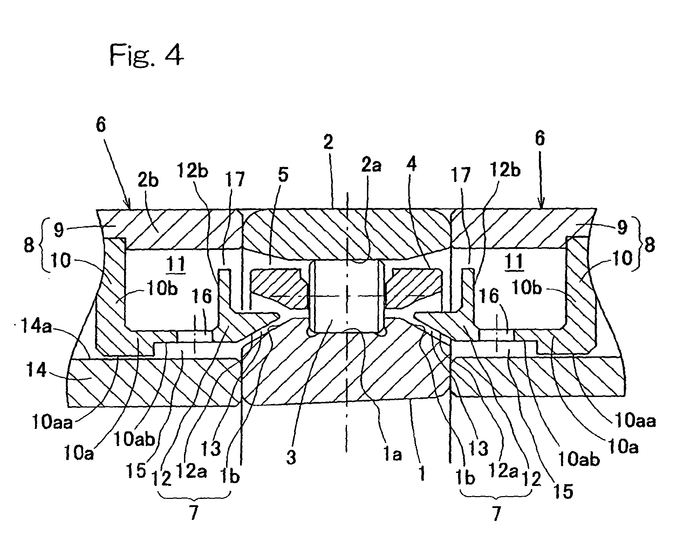

Fig. 4 illustrates a fourth preferred embodiment of the present invention. This embodiment is such that the structure including the mist recovery mechanism 6 and the re-inflow mechanism 7, both in the embodiment shown in Fig. 1, is provided on each side of the outer race 2 in an axial direction thereof. Other structural features are generally similar to those in the embodiment shown in Fig. 1.

In the case of this embodiment, the mist can be recovered and re-inflowed on the both sides of the bearing. Since in the case of the cylindrical roller bearing, rollers forming the rolling elements have a certain length, recovery and re-inflow of the mist on each side is effective to achieve lubrication without being axially biased and is therefore, preferred to increase the lubricity. In this way, increase of the speed and of the service life and the maintenance-free can be promoted.

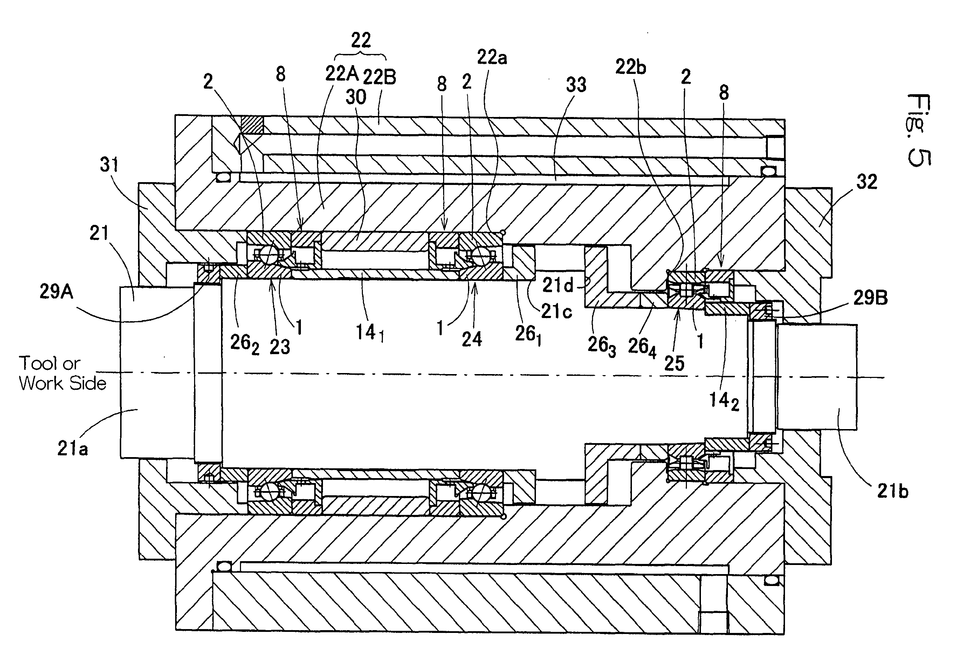

Fig. 5 illustrates an example of a machine tool spindle device utilizing the rolling bearing having the lubricating structure according to any one of the embodiments shown respectively in Figs. 1 and 2. This spindle device is of a structure, in which a spindle 21 is supported within a housing 22 by means of front two rolling bearings 23 and 24 and a rear rolling bearing 25. The front two rolling bearings 23 and 24 are angular contact ball bearings and are provided in back-to-back relation with each other, each being provided with the lubricating structure shown in Fig. 2. The rolling bearing 25 arranged rearwards is a cylindrical roller bearing and is provided with the lubricating structure shown in Fig. 1.

The front two rolling bearings 23 and 24 have respective inner races 1 and 1 positioned by an inner race spacer 14₁, disposed therebetween, and inner race positioning spacers 26₁ and 26₂ and are fixed having been fastened by an inner race fixing nut 29A at a front end to a stepped face 21 c of the spindle 21. The inner race 1 of the rear rolling bearing 25 is positioned by an inner race spacer 14₂ and inner race positioning spacers 26₃ and 26₄ and fixed having been fastened by an inner race fixing nut 29B at a rear end to a stepped face 21 d of the spindle 21.

The outer race 2 of each of the front two rolling bearings 23 and 24 is positioned within the housing 22 and fixed to a stepped face 22a thereof by means of the recovery space defining component 8, an outer race spacer 30 and a front end outer race retaining lid 31. The outer race 2 of the rear rolling bearing 25 is positioned within the housing 22 and fixed to a stepped face 22b thereof by means of the recovery space defining component 8 and a rear end outer race retaining lid 32. The housing 22 is of a structure, in which a housing inner tube 22A and a housing outer tube 22B are mounted one inside the other, with a cylindrical oil supply passage 33 defined therebetween for cooling purpose.

The spindle 21 has a front end portion 21a provided with a chuck (not shown) for removably holding a tool or a work (both not shown) and also has a rear end portion 21b coupled with a rotation transmission mechanism (not shown) of a drive source such as a motor. The motor may be built in the housing 22. This spindle device can be applied to any machine tool such as, for example, a machining center, a turning machine, a milling machine or a grinding machine.

According to the spindle device of the foregoing construction, increase of the speed and of the service life in the rolling bearings 23 and 24 employing the lubricating structure of the present invention can be effectively exhibited.

## Claims

1. A lubricating structure in an inner-race-rotating rolling bearing that is lubricated with a grease sealed within the bearing, which structure comprises a mist recovery mechanism for recovering into a recovery space, a mist generated during an operation in the vicinity of a rolling-element rolling space, and a re-inflow mechanism for re-inflowing the mist, which has been recovered into the recovery space, into a bearing space from an inner-diameter side of a retainer along an inclined surface of an outer-diameter side of an inner race by utilization of rotation of the inner race.

2. The lubricating structure in the rolling bearing as claimed in Claim 1, wherein the mist recovery mechanism comprises a recovery space defining component for defining the recovery space concurrently serving as an outer-race spacer positioned adjacent to an outer race of the bearing.

3. The lubricating structure in the rolling bearing as claimed in Claim 1, wherein the mist recovery mechanism comprises an outer race extension of an outer race, extending axially beyond a plane containing an end face of the inner race, and a ring-shaped recovery space defining component fitted to the outer race extension to define the recovery space inside an inner periphery of the outer race extension.

4. The lubricating structure in the rolling bearing as claimed in Claim 1, wherein the re-inflow mechanism includes a gap defining piece for defining an annular gap along the inclined surface on the outer diameter side of the inner race, one end of the annular gap being communicated with the mist recovery space.

5. The lubricating structure in the rolling bearing as claimed in Claim 2, wherein the re-inflow mechanism includes a gap defining piece for forming an annular gap along the inclined surface on the outer diameter side of the inner race, the gap defining piece being provided in the recovery space defining component, the annular gap being communicated with the recovery space through an opening which is provided in an inner peripheral wall of the recovery space defining component.

6. The lubricating structure in the rolling bearing as claimed in Claim 3, wherein the re-inflow mechanism includes a gap defining piece for forming an annular gap along the inclined surface on the outer diameter side of the inner race, the gap defining piece being provided in the recovery space defining component, the annular gap being communicated with the recovery space through an opening which is provided in an inner peripheral wall of the recovery space defining component.

7. The lubricating structure in the rolling bearing as claimed in Claim 1, wherein the bearing is a cylindrical roller bearing.

8. The lubricating structure in the rolling bearing as claimed in Claim 1, wherein the bearing is an angular contact ball bearing.
